# EUROPÄISCHE PATENTSCHRIFT

(11) **EP 2 511 095 B1**
(45) Veröffentlichungstag und Bekanntmachung des Hinweises auf die Patenterteilung: **25.12.2013**
(21) Anmeldenummer: 12160293.2
(22) Anmeldetag: 20.03.2012
(51) Int. Cl.: B32B 37/12, B32B 37/08, B29C 63/02, B29C 65/14, B29C 65/48

(54) **Kaltkaschierung mit elektromagnetischer Strahlung**
Cold lamination with electromagnetic radiation
Laminage à froid avec radiation éléctromagnétique

(30) Priorität: 22.03.2011 DE 102011005901
(43) Veröffentlichungstag der Anmeldung: 17.10.2012
(73) Patentinhaber: Lisa Dräxlmaier GmbH, 84137 Vilsbiburg (DE)
(72) Erfinder: Fischer, Wolfgang, 84088 Neufahrn (DE); Reisinger, Stephanie, 84028 Landshut (DE); Magunia, Robert, 84144 Geisenhausen (DE)
(74) Vertreter: HOFFMANN EITLE

(56) Entgegenhaltungen:
- DE-A1-102007 007 617
- US-A1- 2004 226 648

## Beschreibung

### Gebiet der Erfindung

Die vorliegende Erfindung betrifft ein Verfahren zur Herstellung von Bauteilen, die im Innenraum eines Fahrzeugs Verwendung finden. Derartige Bauteile sind beispielsweise Verkleidungsteile, unter Anderem im Bereich der Türen, der Armaturentafeln, der Frontelemente von Lenkrädern, oder Teile von Mittelkonsole und Ähnlichem.

Die vorliegende Erfindung betrifft insbesondere ein Verfahren zum Kaltkaschieren einer meist flexiblen Materiallage auf eine Seite eines formstabilen Trägers. Darüber hinaus betrifft die vorliegende Erfindung ein Werkzeug zur Durchführung des Verfahrens.

### Stand der Technik

Ein Verfahren zum Presskaschieren einer Instrumententafel erfolgt über mehrere Schritte, wobei der aufwändigste Abschnitt die Aktivierung eines bereits bei Normtemperatur abgelüfteten Klebstoffs ist. Dieser Klebstoff kann beispielsweise in Form einer wässrigen Dispersion vorliegen. Der Klebstoffauftrag wiederum erfolgt beispielsweise sowohl auf dem Träger und/oder auf die aufzubringende Materiallage (Dekorverbund mit oder ohne Abstandsgewirke).

Nachfolgend werden die Fügekomponenten relativ zueinander vorfixiert, und in ein Presskaschierwerkzeug eingelegt. Die beiden Formhälften des Presskaschierwerkzeuges werden geschlossen, und nach Aufbringung eines gewissen Drucks auf die Fügekomponente erfolgt ein Temperatureintrag vom Werkzeug auf die Fügekomponenten (beispielweise von der Ober- bzw. Dekorseite), und von dort in die Klebefugen zwischen den Fügekomponenten. Hierdurch erfolgt die Aktivierung und Vernetzung des Klebstoffs, so dass dieser seine Haft- und Klebeeigenschaften entfaltet.

Nachteilig bei dem beschriebenen Presskaschierverfahren ist, dass das schlecht wärmeleitende Abdeckmaterial/Dekorunterbaumaterial den Temperatureintrag in die Klebfuge behindert. Hieraus resultieren lange Prozesszeiten (beispielsweise mehrere Minuten pro Fügeprozess), sowie ein hoher benötigter Energieeintrag. Denn bei dem hier skizzierten Verfahren muss der Energieeintrag zur Aktivierung des Klebstoffs ausgehend vom Werkzeug auf das gesamte Bauteil (die zu fügenden Fügekomponenten) erfolgen.

Um die Taktzeiten möglichst zu verkürzen, wird nach der Aktivierung des Klebstoffs das Bauteil im noch warmen Zustand entformt, wobei zur Vermeidung von Rückstellkräften eigentlich eine Kaltentformung vorzuziehen wäre. Der Idealzustand ist deshalb ein Abkühlen des Bauteils noch im Presskaschierwerkzeug, während noch entsprechender Druck auf die Fügekomponenten aufgebracht wird. Allerdings muss aus wirtschaftlichen Gründen eine Abwägung zwischen der Qualität des Fügeergebnisses und einer möglichst kurzen Taktzeit getroffen werden.

Als weiterer Stand der Technik ist das Dokument DE 10 2007 001 132 A1 bekannt. Dieses Schrift betrifft einen Fahrzeugsitz, der eine Sitzkomponente mit einer Sitzheizung aufweist, wobei die Sitzheizung Kohlenstoffnanoröhren als Ohmschen Widerstand aufweist. Zur Erwärmung der Sitzheizung wird ein Strompfad zwischen elektrischen Kontakten bereitgestellt.

Dokument DE 20 2008 010 669 U1 betrifft ein Vakuumkaschierverfahren, bei dem ein Wärmemedium eine Aktivierung des Klebstoffs bedingt. Zusätzlich kann Wärme durch Strahlung eingebracht werden (IR-Strahlung, Hochfrequenz, Mikrowelle).

Als ein Dokument gemäß dem Stand der Technik ist die DE 10 2006 055 474 A1 bekannt. Dieses Dokument betrifft ein Verfahren zur Beschichtung von Oberfläche. Bei diesem bekannten Verfahren lassen sich Foliensysteme mit Hilfe eines NIR-härtbaren Klebestoffs durch Einstrahlung von elektromagnetischer Strahlung im Wellenbereich von λ 750 - 950 nm durch pigmentierte Folie hindurch mit einem Gegenstand verbinden. Bei der Beschichtung wird das Foliensystem auf einer Seite einer Foliensubstratschicht mit einer Klebstoffschicht versehen. Wahlweise kann auch der zu beklebende Gegenstand mit einer Klebstoffschicht versehen werden. Die Beschichtung kann auch durch Hinterspritzen der Folie erfolgen. Dazu wird die Folie vorzugsweise in einem Tiefziehwerkzeug tiefgezogen und die Rückseite der Substratschicht mit Kunststoffmasse hinterspritzt. Die Härtung der strahlungshärtbaren Klebestoffschicht erfolgt erfindungsgemäß durch Einstrahlen von NIR-Strahlung auf die Klebstoffschicht durch die Folienschicht und/oder durch die Substratschicht hindurch.

Allerdings ist das in der DE 10 2006 055 474 A1 beschriebene Verfahren nur beim Fügen von Bauteilen geeignet, die im Außenbereich eingesetzt werden und somit keine gesteigerten Anforderungen an die Oberflächenqualität stellen, wie beispielsweise ein Innenraumverkleidungsteil. Explizit sind hierbei Kotflügel, Tür(außen-)verkleidungen, Stoßstangen, Spoiler, Schürzen sowie Außenspiegel genannt. Ferner betrifft das Verfahren der DE 10 2006 055 474 A1 kein Presskaschierverfahren. Als weiterer Stand der Technik ist die US 2004/0226648 A1 bekannt, die ein Presswerkzeug in Kombination mit einer Mikrowellenquelle offenbart.

### Gegenstand der Erfindung

Die vorliegende Erfindung wurde durchgeführt, um die zuvor genannten Probleme zu lösen, und es ist ein Ziel der vorliegenden Erfindung, ein Verfahren und ein Werkzeug bereitzustellen, mit dem die Taktzeit bei der Herstellung von Presskaschierbauteilen gegenüber dem Stand der Technik reduziert werden kann.

Dieses Ziel wird durch ein Verfahren gemäß Anspruch 1 sowie eine Vorrichtung gemäß Anspruch 10 gelöst. Weitere bevorzugte Ausführungsformen sind in den abhängigen Ansprüchen aufgeführt.

Kerngedanke der vorliegenden Erfindung ist es, die Klebstoffaktivierung und die nachfolgende Trocknung nicht durch einen direkten oder indirekten Temperatureintrag über das Werkzeug auszulösen, sondern mittels einer durch das Presskaschierwerkzeug gelangenden elektromagnetischen Strahlung, insbesondere einer Mikrowellenstrahlung, einer Hochfrequenzstrahlung, oder mittels Induktion.

Das erfindungsgemäße Verfahren gemäß Anspruch 1 bietet den Vorteil, dass eine wesentliche Taktzeitverkürzung erreicht werden kann. Darüber hinaus wird eine übermäßige Hitzeeinwirkung auf die auf einen Träger aufzubringende Dekoroberfläche vermieden. Dies kann zu nachteiligen Effekten führen, wie Glanz- oder Druckstellen oder gar Verbrennungen.

Darüber hinaus wird ein Auftreten temperaturbedingter Rückstellkräfte im Dekor unterbunden, da das Dekor selbst nicht erwärmt wird und daraus resultierende Haftungsstörungen im Umbugbereich und in konkaven Bereichen eines Bauteils ebenfalls vermieden werden. Auch ist der Entformungsprozess für die gefügten Komponenten recht schonend, da das Entformen im kalten Zustand stattfindet.

Weiter kann durch die gezielte Aktivierung des Klebstoffs eine gleichmäßige Temperaturverteilung in den Klebefugen erreicht werden und der Energieverbrauch wird darüber hinaus erheblich gesenkt.

Erfindungsgemäß findet nach dem Aktivieren des Klebstoffs ein Kühlschritt statt, wobei die obere Werkzeughälfte Kühlkanäle aufweist, die mit einem nicht durch die Strahlung angeregten Kühlmittel gefüllt sind. Hierdurch kann die Taktzeit weiter verkürzt werden, wobei sichergestellt ist, dass das Werkstück nach Abschluss des Verfahrens im abgekühlten Zustand aus der unteren Werkzeughälfte entnommen werden kann. Es ist in diesem Zusammenhang besonders bevorzugt, dass das Abkühlen des aktivierten Klebstoffs abgewartet wird, bevor die untere Werkzeughälfte und die obere Werkzeughälfte auseinander bewegt werden.

Gemäß einer Weiterbildung des erfindungsgemäßen Verfahrens wird die indirekte Aktivierung des Klebstoffs dadurch bewirkt, dass ein der flexiblen Materiallage und/oder dem formstabilen Träger zugewandter Abschnitt einer der Werkzeughälften mit einer graphenähnliche Materialien (wie z.B. Fullerene, Kohlenstoffnanoröhren und/oder Graphene) enthaltenen Schicht beschichtet ist, oder der Träger und/oder die Materiallage an einer dem Träger zugewandten Seite abschnittsweise mit einer graphenähnliche Materialien enthaltenen Schicht beschichtet sind oder abschnittsweise graphenähnliche Materialien aufweisen.

Demnach wird nicht eine der Werkzeughälften erwärmt, sondern die Strahlung bedingt eine gezielte Erwärmung des Abschnitts, der für die Aktivierung des Klebstoffs vorgesehen ist.

Gemäß einer anderen Zielrichtung des erfindungsgemäßen Verfahrens ist es zur direkten Aktivierung des Klebstoffs vorgesehen, dass der Klebstoff selbst graphenähnliche Materialien aufweist. Auf diese Weise kann die Aktivierung des Klebstoffs äußerst gezielt durchgeführt werden, denn es werden die bereits im Klebstoff vorhandenen graphenähnlichen Materialien durch die aufgebrachte Strahlung angeregt.

Dabei ist es bevorzugt vorgesehen, dass die obere Werkzeughälfte und/oder die untere Werkzeughälfte zumindest abschnittsweise für die Strahlung transparent ist/sind, und somit die Strahlung passieren lassen, ohne selbst angeregt und erwärmt zu werden.

In bestimmten Ausführungsformen kann die flexible Materiallage durch eine Dekorschicht (z.B. aus Leder, Kunstleder, Folien, Textil, etc.) und/oder eine Abstandsschicht (Haptikschicht) (z.B. Abstandsgewirke, Vliese, Gelpolster, Schaumstoffe, insbesondere Spaltschäume) gebildet sein. Die flexible Materiallage kann mehrschichtig sein. Bei Verwendung von Textilien oder eines Abstandsgewirkes sowie Vliesen, kann es bevorzugt sein deren Fasern mit einer graphenähnliche Materialien enthaltenen Schicht zu beschichten. Auf diese Weise findet durch die Strahlung eine Anregung dieser Bereiche statt, wodurch dann indirekt - jedoch gezielt - der Klebstoff aktiviert wird.

Gemäß einer weiteren Ausführungsform werden die Dauer und/oder die Höhe des Energieeintrags durch die Strahlung auf Grundlage der Art der Aktivierung des Klebstoffs und der Menge der verwendeten graphenähnlichen Materialien eingestellt. Auf diese Weise kann das Verfahren variabel für verschiedenste zu fügende Werkstücke eingesetzt werden, und gleichzeitig die bereits genannten Vorteile verwirklichen.

Ferner betrifft die vorliegende Erfindung eine Vorrichtung, mit der das erfindungsgemäße Verfahren ausgeführt werden kann.

### Kurze Beschreibung der Zeichnungen

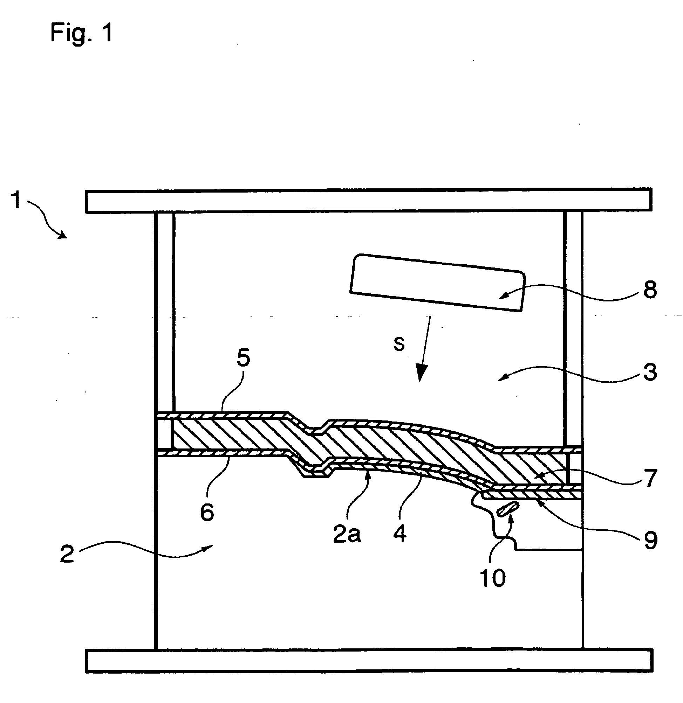

- Figur 1: zeigt eine schematische Ansicht eines Presskaschierwerkzeuges gemäß einer Ausführungsform der vorliegenden Erfindung.

### Detaillierte Beschreibung der bevorzugten Ausführungsformen

Die vorliegende Erfindung wird nachfolgend rein beispielhaft anhand eines Presskaschierverfahrens und eines Presskaschierwerkzeuges beschrieben.

Figur 1 stellt ein Presskaschierwerkzeug 1 dar, das eine untere Werkzeughälfte 2 und eine obere Werkzeughälfte 3 umfasst. Die untere Werkzeughälfte 2 ist zur Aufnahme und Fixierung eines wiederum formstabilen Trägers 4 eingerichtet. Sowohl die untere Werkzeughälfte 2 als auch die obere Werkzeughälften 3 können gekühlt werden. Hierbei umfasst die obere Werkzeughälfte 3 eine formstabile Werkzeugschale 5, die eine formgebende Kontur 6 aufweist. Zwischen der formgebenden Kontur 6, der Werkzeugschale 5 und einer Fläche 2a der unteren Werkzeughälfte 2 wird ein Pressspalt definiert, in dem sich im Betriebszustand die Fügekomponenten (formstabiler Träger und flexible Materiallage) befinden. In der Werkzeugschale 5 sind in der vorliegenden Ausführungsform Kühlkanäle 7 angedeutet, die mit einem Kühlmittel durchströmt werden können.

Oberhalb der oberen Werkzeughälften 3 ist ein elektromagnetischer Strahler 8 angeordnet, der Mikrowellenstrahlung, Hochfrequenzstrahlung, Induktionsstrahlung, Infrarotstrahlung, usw. emittieren kann. Die Richtung der Strahlung ist in Figur 1 mit dem Bezugszeichen S gekennzeichnet.

Bei dem elektromagnetischen Strahler 8 kann es sich beispielsweise um einen Mikrowellendurchlaufofen handeln. Die vom elektromagnetischen Strahler ausgesandte Strahlung kann die nicht absorbierenden Werkstoffe der unteren und/oder oberen Werkzeughälfte 2, 3 durchdringen, da diese beispielsweise aus Kunststoff, Glas oder Keramik hergestellt sind und von der sie durchdringenden Strahlung nicht angeregt werden.

Darüber hinaus kann die Strahlung auch die Fügeteile (also den formstabilen Träger, Dekor/Verbund aus Kunststoffmaterialien) durchdringen, und erreicht somit ungehindert den zwischen den Fügekomponenten befindlichen Klebstoff. In einer Ausführungsform wird die Energie der elektromagnetischen Strahlung durch das im Klebstoff noch enthaltende Wasser (in der Regel 5-40 Gewichts-%) absorbiert, wodurch eine selektive Erwärmung des Klebstoffs in den Klebefugen erreicht wird. Der Aktivierungs- und Trocknungsvorgang erstreckt sich über nur wenige Sekunden. Während dieser Zeit bleibt eine Druckbeaufschlagung im Presskaschierwerkzeug 1 bestehen.

Die in Figur 1 dargestellte Vorrichtung umfasst weiter einen sogenannten Umbugschieber 9 zum Umbugen eines über dem formstabilen Träger 4 überstehendes Teils der flexiblen Materiallage 4a im Randbereich des Trägers.

Benachbart zum Umbugschieber 9 kann ein zusätzlicher Strahler 10 zur gezielten Beaufschlagung des Randbereichs des Trägers mit Energie vorgesehen sein.

Es hat sich hierbei gezeigt, dass eine Aktivierung des Klebstoffs durch verschiedene Verfahren (ggf. in Kombination) gezielt möglich ist, wobei die Aktivierung über Mikrowellenstrahlung, Hochfrequenzstrahlung oder induktiv erfolgt.

Zur Aktivierung des Klebstoffs werden graphenähnlichen Materialien wie Kohlenstoffnanoröhren (CNTs = carbon nanotubes), Fullerene und/oder Graphene oder deren Derivate eingesetzt. Somit wird die Aktivierung der graphenähnlichen Materialien über verschiedene Varianten derart eingesetzt, dass letztlich der Klebstoff oder die Klebstofffuge aktiviert wird.

Hierbei hat es sich als vorteilhaft erwiesen, die nachfolgend genannten varianten (ggf. in Kombination) durchzuführen:

### Variante A:

Gemäß Variante A wird ein Abschnitt der unteren und/oder oberen Werkzeughälfte 2,3 teileseitig mit einer graphenähnliche Materialien enthaltenden Schicht beschichtet. Hierbei kann es sich beispielsweise um einen Kunststoff handeln, der CNTs aufweist. Auch können die CNTs in eine zu den Fügekomponenten weisenden Schicht der jeweiligen Werkzeughälfte 2, 3 eingearbeitet sein. Wird Strahlung durch den Strahler 8 durch eine der Werkzeughälften aufgebracht, so wird die CNTs-enthaltende Schicht "aktiviert" - was in diesem Zusammenhang eine Erwärmung dieser Schicht bedeutet. Ausgehend hiervon findet den ein Wärmeeintrag durch die Fügekomponenten zum Klebstoff statt. Dieser wiederum wird durch den Wärmeeintrag aktiviert, und entfaltet somit seine Haftwirkung.

Gemäß Variante A ist wird somit eine im Stand der Technik bei Presskaschierverfahren bekannte Wärmeübertragung durch eine der Werkzeughälften hindurch vermieden. Auch kann die CNTs-enthaltende Schicht gezielt auf eine Oberfläche der Werkzeughälfte aufgetragen sein, damit eine gezielte Erwärmung erreicht werden kann.

### Variante B:

Gemäß Variante B enthält der formstabile Träger, der in Figur 1 auf die untere Werkzeughälfte 2 aufgelegt ist, zumindest abschnittsweise CNTs. Auf diese Weise kann eine gezielte Aktivierung des Klebstoffs durch vom formstabilen Träger übertragene Wärme erreicht werden.

### Variante C:

Gemäß Variante C enthält der Klebstoff selbst CNTs. Somit werden die CNTs durch die eingebrachte Strahlungsenergie direkt an dem Ort angeregt, wo auch die Aktivierung des Klebstoffs stattfinden soll. Die führt zu einem besonders geringen Energieverbrauch ohne Dissipationsverluste, und einer entsprechend kurzen Aktivierungs- und Abkühlzeit.

### Variante D:

Die Dekorunterseite, die der oberen Werkzeughälfte 3 abgewandt und dem Klebstoff zugewandt ist, wird mit einem CNT-haltigen Primer oder einer entsprechenden Zubereitung beschichtet. Beim Kaschiervorgang wird die CNTs-enthaltende Schicht durch die vom Strahler 8 ausgesandten Strahlung erwärmt (siehe Variante A), und die Wärme zur Aktivierung des Klebstoffs übertragen.

### Variante E:

Die Fasern des Abstandsgewirkes sind mit einem CNT-haltigen Primer oder einer entsprechenden Zubereitung beschichtet, oder weisen selbst CNTs auf. Hinsichtlich der Aktivierung des Klebstoffes wird auf Variante D verwiesen.

Bei den genannten Varianten, die auch in Kombination miteinander zum Einsatz kommen können, wird die Klebeaktivierung mittels einer elektromagnetischen Strahlung erreicht. Es ergeben sich hieraus die nachfolgend genannten Vorteile:

Bei der Variante A, bei der die Werkzeugoberfläche mit CNTs beschichtet ist, wird die Werkzeugoberfläche erwärmt, und es erfolgt hierdurch eine indirekte Aktivierung des Klebstoffs. Auch wenn der Träger, wie in Variante B genannt, mit CNTs versehen ist, wird eine indirekte Erwärmung des Klebstoffs erreicht. Gleiches gilt für die Varianten D und E, bei denen das Abstandsgewirke oder die Dekorschicht erwärmt und hierdurch der Klebstoff aktiviert wird.

Das erfindungsgemäße Verfahren hat den Vorteil, dass eine gleichmäßige Aktivierung und Aufheizung der Fügekomponenten erreicht werden kann. Darüber hinaus wird eine Reduzierung der Taktzeit und eine Reduzierung des Energieverbrauchs realisiert, und es können die Werkzeugkosten gesenkt werden. Da der Energieeintrag direkt erfolgt, und nicht durch eine Erwärmung der unteren oder oberen Werkzeughälfte an sich, kommt es zu geringeren Energieverlusten, und eine Wärmeeinwirkung auf die im Fahrzeug später außen liegende Dekoroberfläche wird verhindert. Auf diese Weise wird die Qualität der Dekoroberfläche durch das Fügeverfahren nicht verschlechtert, und es können temperaturbedingte Rückstellkräfte vermieden werden, die anderenfalls im Werkstoff der Dekorschicht auftreten können.

## Patentansprüche

1. Verfahren zum Kaschieren einer flexiblen Materiallage auf einen formstabilen Träger (4), der bevorzugt eine dreidimensionale Oberflächenkontur aufweist, umfassend die Schritte:
- Bereitstellen des formstabilen Trägers
- Auflegen der flexiblen Materiallage auf dem formstabilen Träger, wobei auf die zum formstabilen Träger weisende Seite der Materiallage und/oder auf der zur Materiallage weisenden Seite des formstabilen Trägers ein thermisch aktivierbarer Klebstoff aufgebracht ist,
- Zusammendrücken der flexiblen Materiallage und des formstabilen Trägers mittels einer unteren formstabilen Werkzeughälfte (2) und einer oberen formstabilen Werkzeughälfte (3),
- Bestrahlen der Werkzeughälften (2, 3), des Trägers (4) und der Materiallage mit einer elektromagnetischen Strahlung, insbesondere einer Mikrowellenstrahlung, einer Hochfrequenzstrahlung oder einer Induktionsstrahlung, wodurch der Klebstoff direkt oder indirekt aktiviert wird,
**dadurch gekennzeichnet, dass** nach dem Aktivieren des Klebstoffs ein Schritt des Kühlens stattfindet, wobei die obere Werkzeughälfte (3) Kühlkanäle (7) aufweist, die mit einem nicht durch die Strahlung angeregten Kühlmittel gefüllt sind.

2. Verfahren gemäß Anspruch 1, bei dem zur indirekten Aktivierung des Klebstoffs
ein der flexiblen Materiallage und/oder dem formstabilen Träger zugewandter Abschnitt einer der Werkzeughälften (2, 3) mit einer graphenähnliche Materialien aufweisenden Schicht beschichtet ist, oder
der Träger (4) und/oder die Materiallage an einer dem Träger zugewandten Seite abschnittsweise mit einer graphenähnliche Materialien aufweisenden Schicht beschichtet sind oder abschnittsweise graphenähnliche Materialien aufweisen.

3. Verfahren gemäß Anspruch 1, bei dem zur direkten Aktivierung des Klebstoffs der Klebstoff graphenähnliche Materialien aufweist.

4. Verfahren gemäß Anspruch 1, bei dem die obere Werkzeughälfte (3) und/oder die untere Werkzeughälfte (2) zumindest abschnittsweise für die Strahlung transparent ist/sind.

5. Verfahren gemäß einem der vorangegangenen Ansprüche, bei dem die Materiallage durch eine Dekorschicht und/oder eine Abstandsschicht gebildet ist.

6. Verfahren gemäß Anspruch 5, bei dem die Materiallage zumindest teilweise aus Fasern gebildet ist und die Fasern des Abstandsgewirkes mit einer graphenähnliche Materialien enthaltenden Schicht beschichtet sind.

7. Verfahren gemäß einem der vorangegangenen Ansprüche, bei dem die Bestrahlung mit der elektromagnetischen Strahlung weniger als 5 Sekunden andauert.

8. Verfahren gemäß einem der vorangegangenen Ansprüche, bei dem das Abkühlen des aktivierten Klebstoffs abgewartet wird, bevor die untere Werkzeughälfte (2) und die obere Werkzeughälfte (3) auseinander bewegt werden.

9. Verfahren gemäß einem der Ansprüche 2 bis 8, bei dem die Dauer und/oder die Höhe des Energieeintrags durch die Strahlung durch die Art der Aktivierung des Klebstoffs und die Menge der verwendeten graphenähnlichen Materialien eingestellt werden.

10. Vorrichtung zum Kaschieren einer flexiblen Materiallage auf einem formstabilen Träger (4), der bevorzugt eine dreidimensionale Oberflächenkontur aufweist, umfassend:
eine den formstabilen Träger (4) haltende, untere Werkzeughälfte (2), und eine obere Werkzeughälfte (3),
wobei die untere Werkzeughälfte (2) und/oder die obere Werkzeughälfte (3) zumindest abschnittsweise durchlässig für elektromagnetische Strahlung ist,
und ein elektromagnetischer Strahler (8) im Bereich der Vorrichtung (1) vorgesehen ist, **dadurch gekennzeichnet, dass** die obere Werkzeughälfte (3) Kühlkanäle (7) aufweist, die mit einem nicht durch die Strahlung angeregten Kühlmittel gefüllt sind.

11. Vorrichtung gemäß Anspruch 10,
bei der ein der flexiblen Materiallage und/oder dem formstabilen Träger zugewandter Abschnitt einer der Werkzeughälften (2, 3) mit einer graphenähnliche Materialien aufweisenden Schicht beschichtet ist, der Träger (4) und/oder die Materiallage an einer dem Träger zugewandten Seite abschnittsweise mit einer graphenähnliche Materialien aufweisenden Schicht beschichtet sind oder abschnittsweise graphenähnliche Materialien aufweisen.

12. Vorrichtung gemäß Anspruch 10,
bei der die obere Werkzeughälfte (3) und/oder die untere Werkzeughälfte (2) zumindest abschnittsweise für die Strahlung transparent ist/sind.

## Claims

1. Method for laminating a layer of flexible material onto a dimensionally stable substrate (4) which preferably has a three-dimensional surface contour, comprising the steps of:
- providing the dimensionally stable substrate,
- laying the layer of flexible material on the dimensionally stable substrate, wherein a thermally activatable adhesive is applied to the side of the layer of material facing towards the dimensionally stable substrate and/or on the side of the dimensionally stable substrate facing towards the layer of material,
- compressing the layer of flexible material and the dimensionally stable substrate by means of a lower dimensionally stable tool half (2) and an upper dimensionally stable tool half (3),
- irradiating the tool halves (2, 3), the substrate (4) and the layer of material with electromagnetic radiation, in particular microwave radiation, highfrequency radiation or induction radiation, as a result of which the adhesive is directly or indirectly activated,
**characterised in that** after activation of the adhesive a cooling step takes place, wherein the upper tool half (3) has cooling channels (7) which are filled with a coolant not excited by the radiation.

2. Method according to claim 1, in which, for indirect activation of the adhesive, a section of one of the tool halves (2, 3) facing towards the layer of flexible material and/or the dimensionally stable substrate is coated with a coat having graphene-like materials, or
the substrate (4) and/or the layer of material on one side facing towards the substrate are coated with a coat having graphene-like materials in sections or have graphene-like materials in sections.

3. Method according to claim 1, in which, for direct activation of the adhesive, the adhesive has graphene-like materials.

4. Method according to claim 1, in which the upper tool half (3) and/or the lower tool half (2) is/are transparent to the radiation at least in sections.

5. Method according to any of the preceding claims, in which the layer of material is formed by a decorative layer and/or a spacer layer.

6. Method according to claim 5, in which the layer of material is at least partially formed from fibres and the fibres of the spacer fabric are coated with a coat containing graphene-like materials.

7. Method according to any of the preceding claims, in which irradiation with the electromagnetic radiation last less than 5 seconds.

8. Method according to any of the preceding claims, in which the activated adhesive is allowed to cool before the lower tool half (2) and the upper tool half (3) are moved apart from each other.

9. Method according to any of claims 2 to 8, in which the duration and/or quantity of energy input by the radiation are adjusted by the manner of activation of the adhesive and the quantity of graphene-like materials used.

10. Apparatus for laminating a layer of flexible material on a dimensionally stable substrate (4) which preferably has a three-dimensional surface contour, comprising:
a lower tool half (2) which holds the dimensionally stable substrate (4), and an upper tool half (3),
wherein the lower tool half (2) and/or the upper tool half (3) is transparent to electromagnetic radiation at least in sections,
and an electromagnetic radiation source (8) is provided in the region of the apparatus (1), **characterised in that** the upper tool half (3) has cooling channels (7) which are filled with a coolant not excited by the radiation.

11. Apparatus according to claim 10,
in which a section of one of the tool halves (2, 3) facing towards the layer of flexible material and/or the dimensionally stable substrate is coated with a coat having graphene-like materials, and the substrate (4) and/or layer of material on one side facing towards the substrate are coated with a coat having graphene-like materials in sections or have graphene-like materials in sections.

12. Apparatus according to claim 10,
in which the upper tool half (3) and/or the lower tool half (2) is/are transparent to the radiation at least in sections.

## Revendications

1. Procédé de placage d'une couche de matériau souple sur un support de forme stable (4) qui présente de préférence un contour superficiel tridimensionnel, comprenant les étapes consistant à :
- préparer le support de forme stable,
- poser la couche de matériau souple sur le support de forme stable, une colle thermoactivable étant appliquée sur le côté tourné vers le support de forme stable de la couche de matériau et/ou sur le côté tourné vers la couche de matériau du support de forme stable,
- comprimer entre elles la couche de matériau souple et le support de forme stable au moyen d'une moitié d'outil inférieure de forme stable (2) et d'une moitié d'outil supérieure de forme stable (3),
- irradier les moitiés d'outils (2, 3) du support (4) et de la couche de matériau avec un rayonnement électromagnétique, en particulier d'un rayonnement micro-ondes, d'un rayonnement à haute fréquence ou d'un rayonnement à induction, par laquelle la colle est activée directement ou indirectement,
**caractérisé en ce que**, après l'activation de la colle, une étape de refroidissement a lieu, la moitié d'outil supérieure (3) présentant des canaux de refroidissement (7) qui sont remplis d'un refroidisseur non excité par le rayonnement.

2. Procédé selon la revendication 1, dans lequel, pour l'activation indirecte de la colle, une section tournée vers la couche de matériau souple et/ou vers le support de forme stable d'une des moitiés d'outils (2, 3) est recouverte d'une couche contenant des matériaux semblables à du graphène, ou
le support (4) et/ou la couche de matériau est/sont recouvert(e)(s) par sections sur un côté tourné vers le support d'une couche contenant des matériaux semblables à du graphène ou contiennent par sections des matériaux semblables à du graphène.

3. Procédé selon la revendication 1, dans lequel, pour l'activation directe de la colle, la colle présente des matériaux semblables à du graphène.

4. Procédé selon la revendication 1, dans lequel la moitié d'outil supérieure (3) et/ou la moitié d'outil inférieure (2) est/sont transparente(s) tout du moins par sections pour le rayonnement.

5. Procédé selon une des revendications précédentes, dans lequel la couche de matériau est constituée par une couche d'ornement et/ou une couche d'espacement.

6. Procédé selon la revendication 5, dans lequel la couche de matériau est constituée tout du moins partiellement de fibres et les fibres du tissu d'espacement sont recouvertes d'une couche contenant des matériaux semblables à du graphène.

7. Procédé selon une des revendications précédentes, dans lequel l'irradiation avec le rayonnement électromagnétique dure moins de 5 secondes.

8. Procédé selon une des revendications précédentes, dans lequel on attend le refroidissement de la colle activée avant que la moitié d'outil inférieure (2) et la moitié d'outil supérieure (3) ne soient écartées l'une de l'autre.

9. Procédé selon une des revendications 2 à 8, dans lequel la durée et/ou la hauteur de l'apport d'énergie par le rayonnement est/sont réglée(s) par le type d'activation de la colle et la quantité de matériaux semblables à du graphène utilisée.

10. Dispositif de placage d'une couche de matériau souple sur un support de forme stable (4) qui présente de préférence un contour superficiel tridimensionnel, comprenant:
une moitié d'outil inférieure (2) supportant le support de forme stable et une moitié d'outil supérieure (3),
la moitié d'outil inférieure (2) et/ou la moitié d'outil supérieure (3) laissant tout du moins par sections passer du rayonnement électromagnétique,
et un projecteur électromagnétique (8) étant prévu au niveau du dispositif (1), **caractérisé en ce que** la moitié d'outil supérieure (3) présente des canaux de refroidissement (7) qui sont remplis d'un refroidisseur non excité par le rayonnement.

11. Dispositif selon la revendication 10,
dans lequel une section tournée vers la couche de matériau souple et/ou vers le support de forme stable d'une des moitiés d'outils (2, 3) est recouverte d'une couche contenant des matériaux semblables à du graphène, le support (4) et/ou la couche de matériau est/sont recouvert(e)(s) par sections sur un côté tourné vers le support d'une couche contenant des matériaux semblables à du graphène ou contiennent par sections des matériaux semblables à du graphène.

12. Dispositif selon la revendication 10,
dans lequel la moitié d'outil supérieure (3) et/ou la moitié d'outil inférieure (2) est/sont transparente(s) tout du moins par sections pour le rayonnement.
